# EUROPÄISCHE PATENTSCHRIFT

(11) **EP 0 310 791 B1**
(45) Veröffentlichungstag und Bekanntmachung des Hinweises auf die Patenterteilung: **21.04.1993**
(21) Anmeldenummer: 88113200.5
(22) Anmeldetag: 13.08.1988
(51) Int. Cl.: H04N 5/225

(54) **Vorrichtung zur Aufnahme einer Szene, insbesondere zwecks deren Wiedergabe auf dem Bildschirm eines Bildschirmgeräts**
Device for recording a scene, especially for display thereof on the screen of a display unit
Dispositif d'analyse d'une scène, en particulier pour son affichage sur l'écran d'un dispositif de visualisation

(30) Priorität: 05.10.1987 DE 3733593
(43) Veröffentlichungstag der Anmeldung: 12.04.1989
(73) Patentinhaber: THYSSEN INDUSTRIE AG, 45128 Essen (DE)
(72) Erfinder: Smith, Terence Martin, D-3523 Grebenstein (DE)
(74) Vertreter: Freiherr von Schorlemer, Reinfried, Dipl.-Phys.

(56) Entgegenhaltungen:
- DE-A- 2 261 466
- DE-A- 3 223 971
- GB-A- 2 172 168

## Beschreibung

Die Erfindung betrifft eine Vorrichtung der im Oberbegriff des Anspruchs 1 definierten Gattung.

Vorrichtungen dieser Art (GB-A-2 172 168) werden in der Regel als Fernsehkameras bezeichnet und benutzt. Sie bringen den Vorteil mit sich, daß durch Verschiebung des Bildaufnehmers innerhalb der Abbildungsfläche beliebige, in ihrer Größe der Größe des Bildaufnehmers entsprechende Ausschnitte der Szene betrachtet werden können Durch Verschiebung des Bildaufnehmers von links nach rechts bzw. umgekehrt (X-Richtung) kann beispielsweise das Verschwenken einer Fernsehkamera und durch Verschiebung des Bildaufnehmers von oben nach unten bei umgekehrt (Y-Richtung) das Kippen einer Fernsehkamera simuliert und ersetzt werden Die Verfolgung von bewegten Gegenständen ist daher zumindest teilweise ohne jede Bewegung der meist schweren und großen Trägheitskräften unterworfenen Fernsehkameras möglich.

Demgegenüber bezweckt die Erfindung, die Vorrichtung der eingangs bezeichneten Art zur Stabilisierung eines Gegenstandes auf einem Bildschirm für den Fall zu nutzen, daß die Vorrichtung nicht ortsfest montiert, sondern selbst bewegt wird, indem sie beispielsweise auf einem Land-, Wasser- oder Luftfahrzeug montiert ist.

Da die bekannte Vorrichtung für diesen Zweck nur bedingt geeignet ist, liegt der Erfindung die Aufgabe zugrunde, diese Vorrichtung so auszubilden, daß sie eine Drei-Richtungs-Stabilisierung ermöglicht.

Zur Lösung dieser Aufgabe sind bei einer Vorrichtung der Oben genannten Art die kennzeichnenden Merkmale des Anspruchs 1 vorgesehen.

Weitere vorteilhafte Merkmale der Erfindung ergeben sich aus den Unteransprüchen

Die Erfindung wird nachfolgend in Verbindung mit der beiliegenden Zeichnung an Ausführungsbeispielen näher erläutert. Es zeigen:
Fig. 1 eine schematische Darstellung einer Anwendungsform der Erfindung;
Fig. 2 einen schematischen Längsschnitt durch eine erfindungsgemäße Vorrichtung als Draufsicht längs der Schnittlinie II-II der Fig. 4;
Fig. 3 einen schematischen Längsschnitt durch die Vorrichtung nach Fig. 2 als Seitenansicht längs der Schnittlinie III-III der Fig. 4;
Fig. 4 einen Schnitt längs der Linie IV-IV der Fig. 3;
Fig. 5 ein schematisches Blockschaltbild der Vorrichtung nach Fig. 2 bis 4;
Fig. 6a bis 6c schematisch die abschnittweise Abtastung eines Gesichtsfeldes mit der Vorrichtung nach Fig. 2 bis 5;
Fig. 7 schematisch eine Anwendungsmöglichkeit für die Vorrichtung nach Fig. 2-4;
Fig. 8 einen Längsschnitt durch eine Schleifringanordnung der Vorrichtung nach Fig. 2-4;
Fig. 9 eine schematische perspektivische Darstellung einer zweiten Ausführungsform eines Antriebsmechanismus für die Vorrichtung nach Fig. 2-4;
Fig. 10 und 11 schematisch die Wiedergabe von Einzelheiten eines im Gesichtsfeld der Vorrichtung nach Fig. 2 bis 5 befindlichen Gegenstands auf dem Bildschirm eines Bildschirmgeräts; und

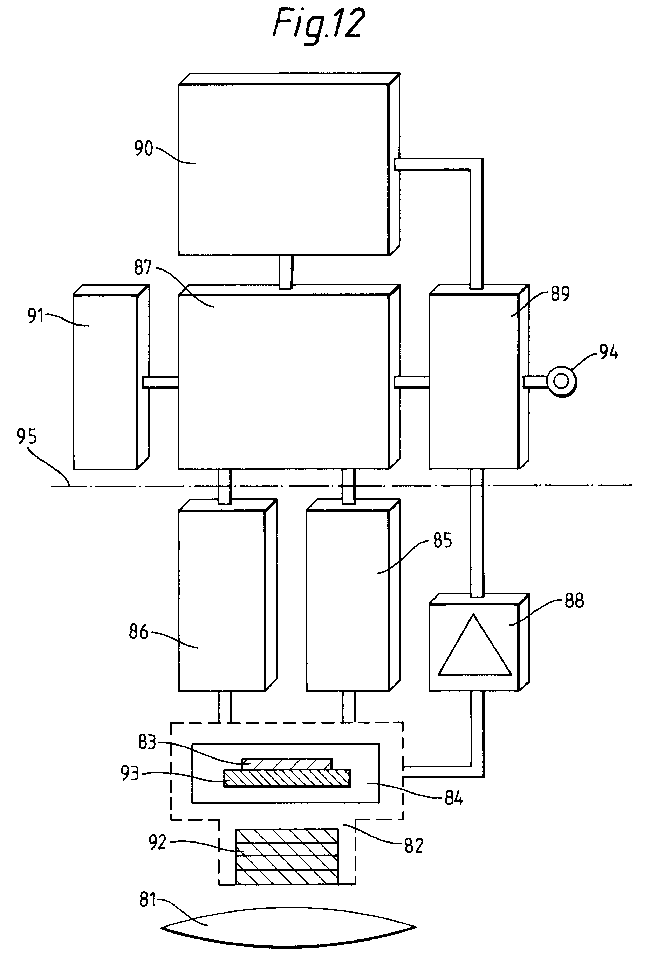

Fig. 12 das Blockschaltbild einer Schaltungsanordnung, die an die erfindungsgemäße Vorrichtung angeschlossen werden kann.

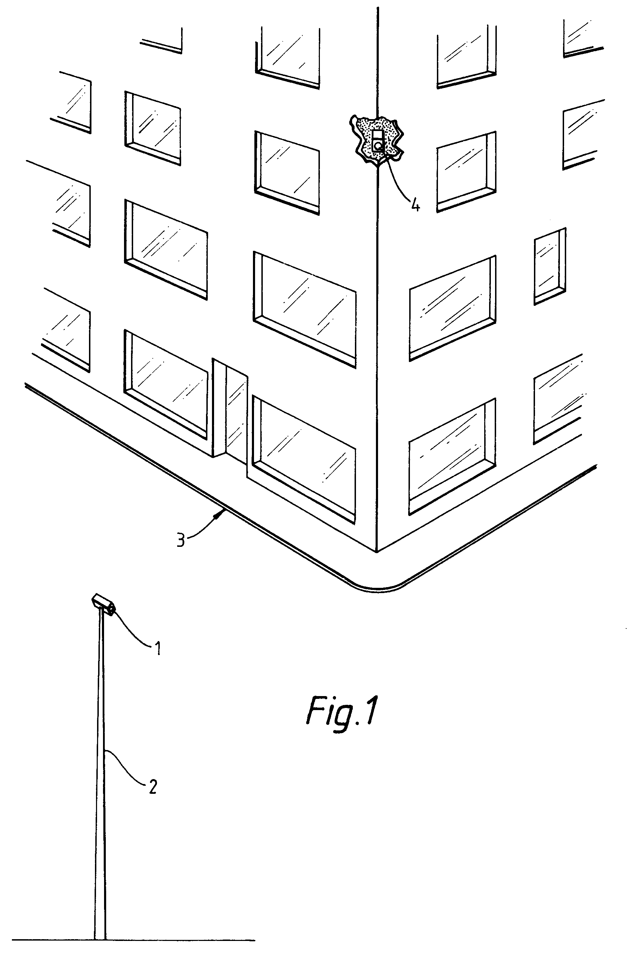

Fig. 1 zeigt schematisch eine Vorrichtung 1, die auf einem Mast 2 montiert ist und zur Beobachtung oder Überwachung eines Gebäudes 3 dient. Die Vorrichtung 1 könnte alternativ, wie durch das Bezugszeichen 4 angedeutet ist, im Gebäude 3 montiert sein und zur Beobachtung oder Überwachung des vor dem Gebäude befindlichen Raums dienen.

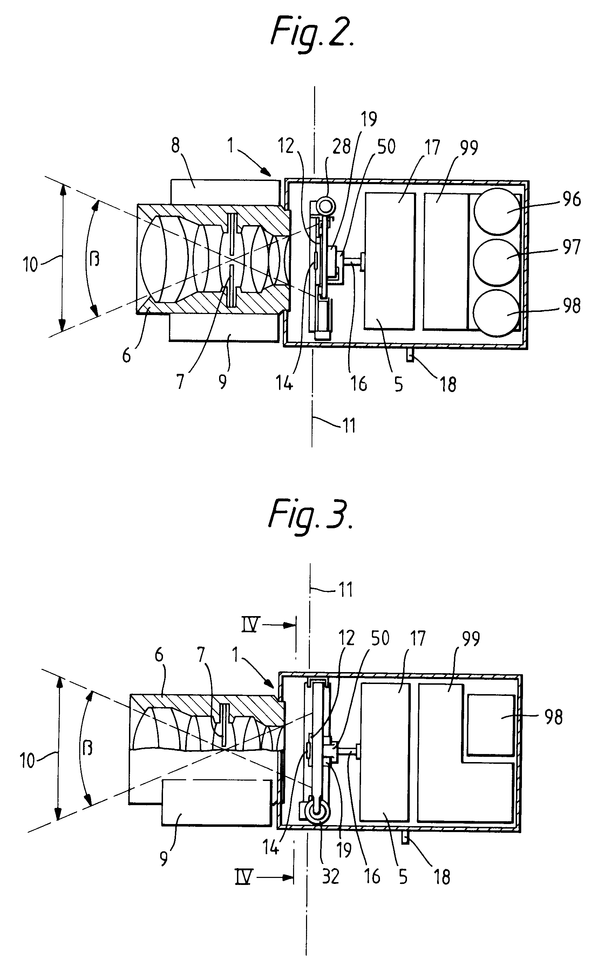

Nach Fig. 2 und 3 enthält die Vorrichtung 1 ein geschlossenes Gehäuse 5, das an seiner Vorderseite eine Öffnung aufweist, in die ein Objektiv 6 auswechselbar eingesetzt ist. Das Objektiv 6 weist wie üblich eine Blende 7 auf und kann zusätzlich mit manuell oder automatisch steuerbaren Einrichtungen 8 und 9 zur Steuerung der Blendenöffnung und der Scharfeinstellung versehen sein. Das Objektiv 6 bildet, wie dies bei herkömmlichen Fernsehkameras allgemein üblich ist, eine Szene 10 in einer schematisch angedeuteten, vorzugseise ebenen Abbildungsfläche 11 scharf ab, deren Abstand von der Blende 7 davon abhängt, welche Brennweite das Objektiv 6 besitzt. Dabei stellt die Szene 10 das scheinbare Gesichtsfeld der Vorrichtung 1 dar, das durch ein konisches Lichtbündel mit dem spitzen Winkel β definiert ist.

Im Gehäuse 5 ist hinter dem Objektiv 6 eine Signalplatte 12 angeorndet, die einen lichtempfindlichen, flächig ausgebildeten Bildaufnehmer 14 trägt. Die Signalplatte 12 besteht vorzugszweise aus einem CCD-Chip (CCD = Charge Coupled Device), an dem ein Bildaufnehmer 14 vorgesehen ist, der durch eine Vielzahl von lichtempfindlichen Elementen oder Zellen gebildet wird, die z.B. in Zeilen und Spalten angeordnet sind und optoelektronische Wandler darstellen, die bei Bestrahlung mit Licht ein dem Helligkeits- oder Farbwert des Lichts entsprechendes, analoges elektrisches Signal abgeben. Dabei bilden alle lichtempfindlichen Elemente oder Zellen eine der Abbildungsfläche entsprechende ebene oder gekrümmte, lichtempfindliche Fläche. Die Signalplatte 12 kann im übrigen an ihrer Rückseite mit den erforderlichen Leitungen, Verstärkern, Speichern od. dgl. versehen sein, die eine Platine bilden und häufig zusammen mit der Signalplatte 12 und dem Bildaufnehmer 14 zu einem integrierten Halbleiterbauelement zusammengefaßt sind. Der Bildaufnehmer 14 oder die Platine ist über flexible Kabel 16 mit einer Einrichtung 17 verbunden, die die zum Abtasten des Bildaufnehmers 14 erforderlichen Steuerschaltungen od. dgl. und die zur Verarbeitung der durch die Abtastung erhaltenen elektrischen Signale erfordlichen Elektronik enthält und an einem Ausgang 18 das übliche, standardisierte Bild- bzw. Videosignal (z.B. nach CCIR) abgibt. Die lichtempfindliche Fläche der Signalplatte 12 ist dabei kleiner, vorzugsweise wesentlich kleiner als die Abbildungsfläche 11.

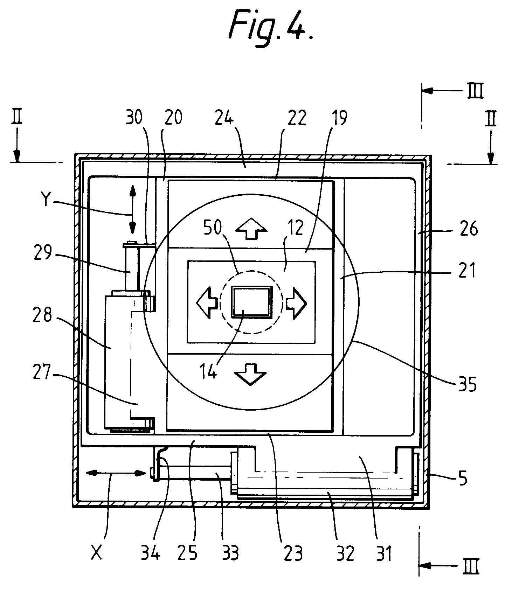

Gemäß Fig. 4 ist die Signalplatte 12 an einer Halterung 19 befestigt, die vorzugsweise aus einem rechteckigen Rahmen besteht, der an seinen beiden seitlichen Enden in je einer Y-Führung 20 bzw. 21 verschiebbar gelagert ist. Die Y-Führungen 20,21 sind parallel zueinander und parallel zur Abbildungsfläche 11 (Fig. 2,3) angeordnet. Beide Y-Führungen 20,21 sind außerdem an ihren oberen und unteren Enden durch parallele Querstege 22,23 verbunden und bilden mit diesen einen weiteren Rahmen, der in oberen bzw. unteren, parallel zueinander und parallel zu Abbildungsfläche 11, jedoch senkrecht zu den Y-Führungen 20,21 angeordneten X-Führungen 24,25 verschiebbar angeordnet ist. Die X-Führungen 24,25 sind durch seitliche Streben zu einem weiteren Rahmen 26 verbunden, der fest im Gehäuse 5 montiert ist.

Die Führung 20 ist mit einem seitlichen Ansatz 27 versehen, mit dem ein Antriebsmechanismus verbunden ist. Dieser enthält z.B. einen am Ansatz 27 befestigten, in Y-Richtung wirksamen, linearen Antrieb 28, der auf eine Schubstange 29 einwirkt, die über einen Steg 30 mit der Haltung 19 fest verbunden ist. Beim Ein- und Ausfahren der Schubstange 29 durch den Antrieb 28 parallel zu einem Pfeil Y wird die Halterung 19 daher in Y-Richtung bewegt. Entsprechend weist der Rahmen 26 einen unteren Ansatz 31 auf, der mit einem weiteren Antriebsmechanismus verbunden ist. Dieser enthält z.B. einen am Ansatz 31 befestigten, in X-Richtung wirksamen, linearen Antrieb 32, der eine Schubstange 33 aufweist, die über einen Steg 34 mit der Y-Führung 20 oder dem Ansatz 27 fest verbunden ist. Beim Ein- und Ausfahren der Schubstange 33 durch den Antrieb 32 parallel zu einem Pfeil X wird die Halterung 19 zusammen mit den für die Y-Bewegung erforderlichen Bauteilen in X-Richtung verschoben. Im übrigen erfolgen die Bewegungen der Halterung 19 in X- und Y-Richtung so, daß der Bildaufnehmer 14 stets mit seiner gesamten lichtempfindlichen Fläche in der Abbildungsfläche 11 verbleibt. Diese ist mit einem Kreis 35 (Fig. 4) als derjenige Bereich angedeutet, der sich bei der Abbildung der gesamten, in Fig. 2 und 3 durch den Winkel β bezeichneten und vom Objektiv 6 scharf abbildbaren Szene ergibt und wesentlich größer ist, als der lichtempfindlichen Fläche des Bildaufnehmers 14 entspricht.

Die Antriebsmechanismen für den Bildaufnehmer 14 enthalten vorzugsweise Antriebe 28 bzw. 32 in Form von elektrisch steuerbaren Linearmotoren, mittels derer die Schubstangen 29 und 33 linear hin- und herbewegbar sind. Alternativ kann es sich aber auch um beliebige andere Antriebe, z.B. reversierbare Gleichstrommotoren handeln, deren als Gewindespindeln ausgebildete Antriebswellen in je einer in den Stegen 30 bzw. 34 ausgebildeten Mutter mit Innengewinde drehbar gelagert sind. Weiterhin könnten die Schubstangen 29 und 33 als Kolbenstangen von pneumatischen oder hydraulischen Zylinder/Kolben-Anordnungen ausgebildet sein. Möglich ist es auch, manuell zu betätigende Antriebsmechanismen vorzusehen, indem die Schubstangen 29 bzw. 33 beispielsweise lediglich mit aus dem Gehäuse 5 herausragenden und mit den Händen zu erfassenden Enden versehen werden.

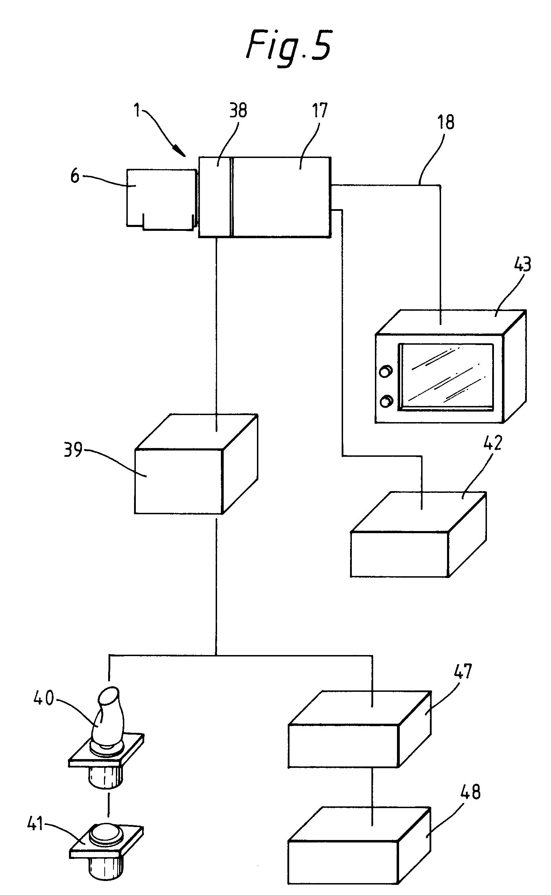

In Fig. 5 sind die mit Hilfe der Antriebsmechanismen zu bewegenden Teile schematisch als Block 38 dargestellt, der mit einer Steuerschaltung 39 derart verbunden ist, daß die Bewegungen in X- bzw. Y-Richtung mit Hilfe von manuell betätigbaren Organen in Form von Hebel- oder Kugelelementen 40 bzw. 41 gesteuert werden können. Außerdem zeigt Fig. 5 eine mit der Vorrichtung 1 verbundene Stromversorgung 42 und ein mit dem Ausgang 18 verbundenes Bildschirmgerät 43, dem das Bildsignal zugeführt wird. Alternativ könnte mit dem Ausgang 18 auch ein magnetisches Aufzeichnungsgerät od. dgl. verbunden sein.

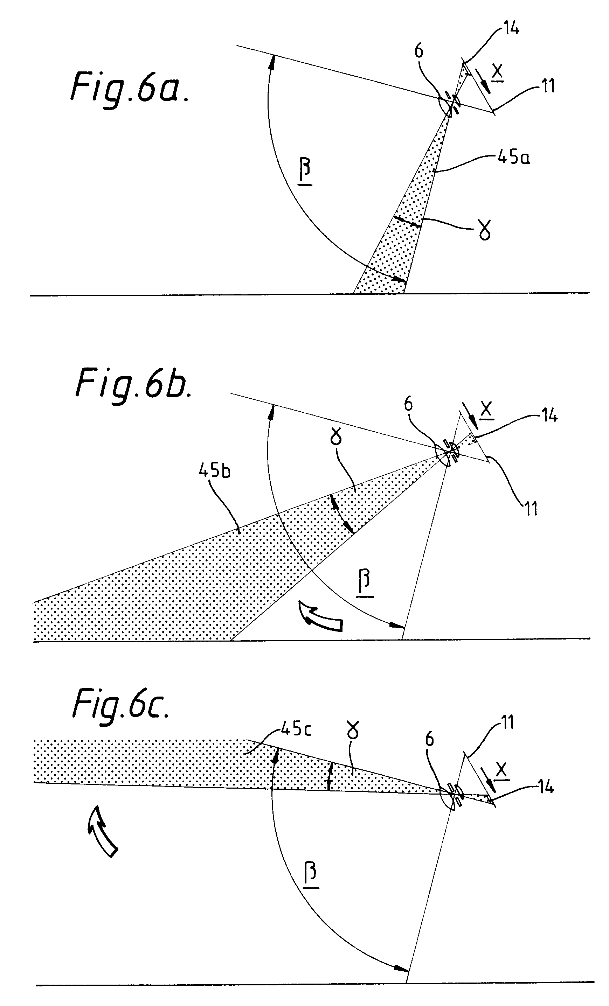

In Fig. 6 ist schematisch das Objektiv 6 mit seinem kegelförmigen, scheinbaren Gesichtsfeld β angedeutet. Das gesamte Gesichtsfeld wird in der Abbildungsfläche 11 des Objektivs abgebildet, in welcher der Bildaufnehmer 14 verschiebbar ist, wobei in Fig. 6 nur die Verschiebbarkeit in X-Richtung angedeutet ist.

Wie Fig. 6 zeigt, wird das Gesichtsfeld des Objektivs 6 in der Abbildungsfläche 1 wesentlich größer abgebildet, als den Abmessungen des Bildaufnehmers 14 entspricht, bzw. es wird ein Bildaufnehmer 14 verwendet, dessen Abmessungen wesentlich kleiner sind, als dem in der Abbildungsfläche 11 abgebildeten Bild des vom Objektiv 6 gesehenen Raums entspricht. Das hat zur Folge, daß vom Bildaufnehmer 14 jeweils nur derjenige kleine Abschnitt des gesamten abgebildeten Bildes erfaßt wird, der in Fig. 6 durch schraffierte Kegel 45a, 45b bzw. 45c mit den spitzen Winkeln γ angedeutet ist und als das tatsächliche Sehfeld der Vorrichtung 1 bezeichnet werden muß. Befindet sich daher der Bildaufnehmer 14 gemäß Fig. 6a in seiner einen Endposition, dann erfaßt er den Kegel 45a. Wird der Bildaufnehmer 14 in Richtung des Pfeils x allmählich in die andere Endposition nach Fig. 6c vorgeschoben, dann erfaßt er in dieser den Kegel 45c und auf seinem Weg dorthin dazwischen befindliche Kegel, z.B. den Kegel 45b nach Fig. 6b. Entsprechendes gilt bei Verschiebungen des Bildaufnehmers 14 in Y-Richtung.

Die lichtempfindlichen Elemente des Bildaufnehmers 14 werden mit den üblichen Mitteln der Fernseh- bzw. Bildschirmtechnik zeilen- und spaltenweise abgetastet und in ein Bildsignal umgewandelt. Dieses enthält Informationen, die analog zu den Helligkeits- bzw. Farbwerten derjenigen Bildpunkte des in der Abbildungsfläche 11 abgebildeten Bildes sind, die auf die lichtempfindliche Fläche des Bildaufnehmers 14 fallen. Da diese lichtempfindliche Fläche mit Hilfe der üblichen Fernseh- bzw. Bildschirmelektronik jeweils als Vollbild auf dem Bildschirm des Bildschirmgeräts 43 (Fig. 5) reproduziert wird, wird auf diesem einerseits jeweils derjenige kleine Ausschnitt des Gesichtsfelds des Objektivs 6 sichtbar gemacht, der in Fig. 6 durch die Kegel 45a bis 45c mit den spitzen Winkeln definiert ist und daher dem tatsächlichen Sehfeld entspricht. Andererseits kann der sichtbar gemachte Ausschnitt des Gesichtsfeldes β durch bloße Verschiebung des Bildaufnehmers 14 in der Abbildungsfläche 11 beliebig vorgewählt werden, ohne daß es erforderlich ist, das Objektiv 6, das Gehäuse 5 oder die Einrichtung 17 in irgendeiner Weise zu bewegen. Entsprechendes gilt für den Fall, daß ein durch die erfaßte Szene bewegter Gegenstand verfolgt werden soll. Unter "tatsächlichem" Sehfeld wird daher der jeweils auf dem Bildschirm erscheinende Ausschnitt, unter "scheinbarem" Gesichtsfeld dagegen die zwar in der Abbildungsfläche 11 erscheinende, aber als Ganzes nicht auf dem Bildschirm sichtbar zu machende Szene verstanden.

Die mit der beschriebenen Vorrichtung erzielbaren Vorteile ergeben sich insbesondere aus Fig. 1. Bisher ist es erforderlich, eine Fernsehkamera zur deutlichen, abschnittsweisen Wiedergabe eines großen Gegenstands, z.B. des Gebäudes 3, kipp- bzw. schwenk- und drehbar auf dem Mast 2 oder an der Stelle 4 anzuordnen. Bei der Anordnung auf dem Mast 2 sind dazu an der Mastspitze angeordnete und durch den Mast 2 hindurch steuerbare Schwenk- und Drehlager erforderlich, während bei der Anordnung an der Stelle 4 eine ausreichend große, die Bewegungen der Kamera ermöglichende Maueröffnung vorhanden sein muß. Bei Anwendung der erfindungsgemäßen Vorrichtung 1 dagegen kann ein vergleichsweise kleines, flaches und lediglich das Objektiv 6 und die verschiebbaren Teile sowie den Antriebsmechanismus enthaltendes Gehäuse starr auf dem Mast 2 bzw. an der Stelle 4 montiert werden, so daß dieses Gehäuse lediglich durch elektrische Leitungen mit den übrigen, am Erdboden oder im Gebäude 3 montierten Einrichtungen verbunden werden braucht und keinerlei Abdichtungsprobleme od. dgl. auftreten.

Aufgrund der Gewichtsreduzierung der zu bewegenden Teile ist weiterhin bei automatischer Steuerung der Antriebsmechanismen mit erheblichen Energieeinsparungen zu rechnen, was insbesondere vorteilhaft ist, wenn die erfindungsgemäße Vorrichtung 1 in oder an bewegten Objekten wie Kraftfahrzeugen oder Schiffen eingesetzt wird. Durch Wahl geeigneter Weitwinkelobjektive können schließlich scheinbare Gesichtsfelder mit β = 180° und sogar mehr erhalten werden, und selbst die Anwendung sog. Fischaugenobjektive ist möglich, insbesondere wenn für einen bestimmten Beobachtungs- oder Überwachungsauftrag keine ideal verzerrungsfreie Bildwiedergabe erforderlich ist.

Die Beweglichkeit des Bildaufnehmers 14 in zwei unterschiedliche Richtungen kann anstatt zur Erfassung und ggf. Verfolgung eines innerhalb der aufnehmbaren Szene befindlichen Gegenstands auch in einfacher Weise zur Stabilisierung eines Gegenstands auf dem Bildschirmgerät 43 (Fig. 5) für den Fall dienen, daß die gesamte beschriebene Vorrichtung 1 selbst bewegt wird. Dies ergibt sich beispielsweise bei der Montage der Vorrichtung 1 an einem Kraftfahrzeug, einem Schiff, einem Flugzeug oder irgendeinem anderen Flugkörper. Jede Bewegung der Vorrichtung 1 aufgrund einer Instabilität des Körpers, an dem sie montiert ist, hätte zur Folge, daß auf dem Bildschirmgerät 43 ein anderer Ausschnitt der von der Kamera eingefangenen Szene erscheint. Zur Vermeidung dieses Nachteils ist es möglich, den Bildaufnehmer 14 in den beiden beispielsweise angegebenen X- und Y-Richtungen derart zu bewegen, daß trotz Bewegungen der Kamera in diesen beiden Richtungen der sichtbar gemachte oder aufgezeichnete Gegenstand stets derselbe bleibt. Mit anderen Worten kann jede Richtungsabweichung der Kamera in X-Richtung oder Y-Richtung durch eine entsprechende, in entgegengesetzter X- bzw. Y-Richtung erfolgende Bewegung des Bildaufnehmers 14 kompensiert werden.

Die einfachste Form einer derartigen Stabilisierung ergibt sich durch Ausnutzung der in Schiffen, Flugzeugen od. dgl. üblicherweise vorhandenen Kreiselplattformen, die in Fig. 5 schematisch durch einen Block 47 angedeutet sind. Derartige Kreiselplattformen sind ein Bestandteil üblicher Trägheits-Navigationsanlagen und liefern elektrische Signale, die den Abweichungen des Schiffs, Flugzeugs od. dgl. von einer räumlich als starr angenommenen X- bzw. Y-Achse, d.h. einem raumfesten Koordinatensystem entsprechen. Die so erhaltenen Signale werden dann den Antrieben 28 und 32 zugeführt. Anstelle der Ausgangssignale von Kreiselplattformen können für diesen Zweck auch die Ausgangssignale üblicher Hintergrund-Tracker (background-tracker) verwendet werden, die in Fig. 5 schematisch durch einen Block 48 angedeutet sind und bei denen es sich um durch Computer gesteuerte Anlagen handelt, die einen ausgewählten Fixpunkt als raumfesten Bezugspunkt zur Berechnung der Abweichungen der Lage der Schiffe, Flugzeuge od. dgl. in X- bzw. Y-Richtungen verwenden. Alternativ wäre dann auch denkbar, beide Geräte zu kombinieren und beispielsweise den Block 47 zur Grobstabilisierung und den Block 48 zur Feinstabilisierung zu verwenden.

Die beschriebene Art der Stabilisierung ist eine Zwei-Richtungs-Stabilisierung, die für Anwendungszwecke ausreicht, bei denen die Vorrichtung 1 um die X- bzw. Y-Achse verschwenkt werden kann, bezüglich der Z-Achse jedoch starr angeordnet bzw. auf der Z-Achse fortbewegt wird, ohne um diese schwenkbar zu sein. Sind auch Drehungen oder Verschwenkungen um die Z-Achse möglich, reicht die X- und Y-Stabilisierung zwar dazu aus, den jeweils betrachteten Gegenstand im Bildschirm zu stabilisieren. Es läßt sich aber nicht vermeiden, daß dieser Gegenstand entsprechend den Bewegungen der Vorrichtung 1 um die Z-Achse kippt.

Gemäß einer ersten Ausführungsform sieht die Erfindung daher vor, den Bildaufnehmer 14 nicht nur parallel zur X- und Y-achse beweglich anzuordnen, sondern auch um die Z-Achse drehbar zu lagern. Hierzu ist die Signalplatte 12 nicht starr an der Halterung 19 befestigt, sondern mittels eines weiteren Antriebsmechanismus drehbar an ihr gelagert. Dieser weitere Antriebsmechanismus enthält beispielsweise einen Antrieb 50 (Fig.4), der auf der Rückseite der Halterung 19 befestigt ist und über ein nicht dargestelltes, den Kabeln 16 ähnliches flexibles Kabel mit der Einrichtung 17 verbunden sein kann. Dadurch ist es möglich, die Halterung 19 und mit ihr den Antrieb 50 in X- bzw. Y-Richtung zu verschieben und gleichzeitig den Bildaufnehmer 14 um die Z-Achse zu drehen. Eine um die Z-Achse erfolgende Drehung der gesamten Vorrichtung 1 aufgrund einer entsprechenden Drehbewegung desjenigen Körpers, an dem sie montiert ist, kann daher durch entsprechende Gegendrehung des Bildaufnehmers 14 kompensiert werden, so daß sich ein in jeder Hinsicht stabilisierter Bildausschnitt ergibt. Die Stellsignale für den Antrieb 50 können wie die der Antriebe 28 und 32 von den Ausgängen der Blöcke 47 und/oder 48 abgenommen werden.

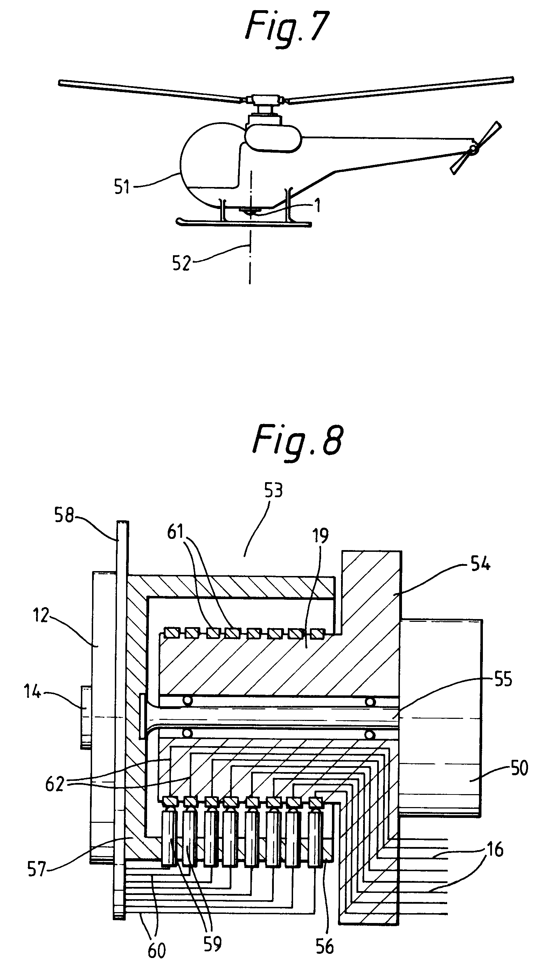

Zuweilen ist es auch erwünscht, ein stehendes Bild in rollenden Flugkörpern zu erhalten, d.h. solchen, die sich um beliebige Vielfache von 360° um die Z-Achse drehen können. Ein derartiger Anwendungsfall ergibt sich beispielsweise, wenn die Vorrichtung 1 entsprechend Fig. 7 an einem schematisch angedeuteten Hubschrauber 51 montiert ist und die Z-Achse als die Vertikale (= Linie 52) angenommen wird. Soll der Hubschrauber 51 um die Z-Achse beliebig oft in demselben Drehsinn wenden können, muß der Bildaufnehmer entsprechend oft um die Z-Achse drehbar sein. Um hierbei zu vermeiden, daß sich die flexiblen Kabel 16 (Fig. 2 und 3) verzwirnen bzw. verseilen, kann entsprechend Fig. 8 vorgesehen sein, die Signalplatte 12 mittels einer vorzugsweise in Mikro-Bauweise ausgebildeten Schleifringanordnung 53 zu lagern.

Zu diesem Zweck ist die Halterung 19 beispielsweise als Hülse ausgebildet und mit einem Flansch 54 versehen, an dem der Antrieb 50, vorzugswiese ein Drehmotor, befestigt ist, der eine parallel zur Z-Achse bzw. in der Z-Achse angeordnete, drehbare Antriebswelle 55 aufweist. Die Halterung 19 ist koaxial von einem Zylinder 56 umgeben, der am dem vom Antrieb 50 angewandten Ende mit einer an der Antriebswelle 55 befestigten Stirnwand 57 versehen ist. Diese Stirnwand 57 dient als Träger für eine auf der Rückseite der Signalplatte 12 angebrachte Platine 58, in der die zu den Kabeln 16 führenden elektrischen Leitungen usw. enthalten sind.

Der Zylinder 56 weist an seinem Innenmantel eine Vielzahl von Schleifbürsten 59 auf, die in Fig. 8 nur schematisch angedeutet sind. Die Schleifbürsten 59 sind mit je einer von der Platine 58 kommenden und bei Bedarf durch die Stirnwand 57 geführten Leitung 60 verbunden und liegen an je einem Schleifring 61 an, wobei alle Schleifringe 61 auf dem Außenmantel der Halterung 19 angebracht und in axialer Richtung voneinander beabstandet sind. Die Schleifringe 61 sind ihrerseits über je eine durch die Halterung 19 und deren Flansch 54 geführte Leitung 62 nach außen geführt und dort zu den aus Fig. 2 und 3 ersichtlichen Kabeln 16 zusammengefaßt. Die Schleifbürsten 59 und Schleifringe 61 bestehen im übrigen aus einem elektrisch gut leitenden Material, wobei die Schleifringe 61 die Antriebswelle 55 koaxial umgeben. Dadurch ist bei Drehung der Antriebswelle 55 stets jede Leitung 60 über ein zugeordnetes Paar aus Schleifbürste 59 und Schleifring 61 mit einer zugeordneten Leitung 62 verbunden, wobei sich die Leitungen 60 zusammen mit der Stirnwand 57 und der Signalplatte 12 drehen, während die Leitungen 62 und damit auch die Kabel 16 undrehbar gehalten sind und nur zusammen mit der Halterung 19 in X-bzw. Y-Richtung bewegt werden können. Die dargestellte Schleifringanordnung 53 ermöglicht es daher, die Antriebswelle 55 beliebig oft in derselben Richtung um je 360° zu drehen, ohne daß sich die Kabel 16 verzwirnen bzw. verseilen können.

Die erfindungsgemäße Vorrichtung ist nicht darauf beschränkt, daß die Signalplatte 12 parallel zu den Koordinaten eines rechtwinkligen XY-Koordinatensystems beweglich ist. Es wäre beispielsweise auch möglich, die X- bzw. Y-Bewegungen unter von 90° abweichenden Winkeln erfolgen zu lassen. Möglich ist weiter, die Signalplatten einerseits auf einem Kreisbogen zu bewegen und andererseits den Radius des Kreisbogens zu variieren, d.h. die Bewegung längs Polarkoordinaten statt kartesischen Koordinaten zu steuern. Auch bei einer derartigen Ausführungsform kann eine zusätzliche Drehung der Signalplatten um die Z-Achse, d.h. um eine Achse vorgesehen werden, die zu der Fläche senkrecht steht, innerhalb von welcher die Signalplatten in zwei Richtungen beweglich sind.

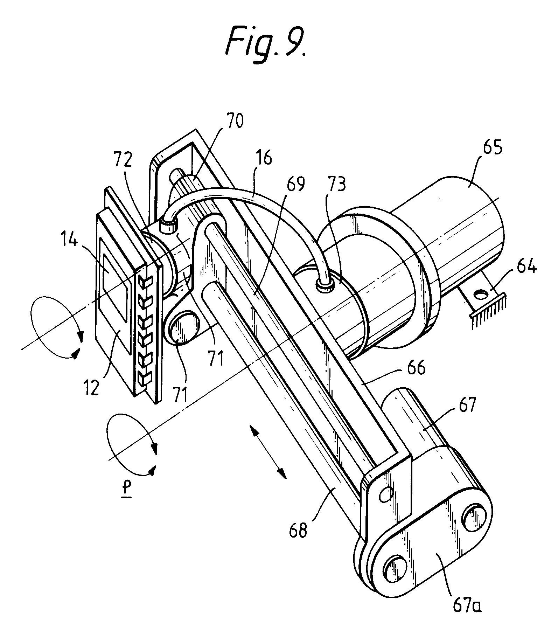

Eine derartige zweite Ausführungsform der Erfindung ist schematisch in Fig. 9 dargestellt, wobei angenommen ist, daß die gesamte Vorrichtung 1, von der nur die zur Bewegung des Bildaufnehmers 14 erforderlichen Teile dargestellt sind, an einem Körper 64 montiert ist, bei dem es sich beispielsweise um einen Flugkörper od. dgl. handeln kann. Am Körper 64 ist ein erster Antriebsmechanismus mit einem Antrieb 65 in Form eines Drehmotors starr montiert, an dessen Antriebswelle ein Montageblock 66 befestigt ist. Am Montageblock 66 ist ein zweiter Antriebsmechanismus starr montiert, der einen Antrieb 67 aufweist. Dieser besteht beispielsweise aus einem Drehmotor, der am Montageblock 66 befestigt ist und eine Antriebswelle aufweist, die über ein Winkelgetriebe 67a mit einer drehbar im Montageblock 66 gelagerten Gewindespindel verbunden ist. Dabei steht die Achse der Antriebswelle des Antriebs 65 vorzugsweise senkrecht zur Achse der Gewindespindel 68.

Am Montageblock 66 ist wenigstens eine zur Gewindespindel 68 parallele Führungsschiene 69 befestigt, die durch eine Führungsbohrung eines weiteren Montageblocks 70 ragt, der auch eine Gewindebohrung aufweist, in welche die Gewindespindel 68 eingedreht ist. An der Vorderseite des Montageblocks 70 ist ein dritter Antriebsmechanismus mit einem Antrieb 71 befestigt, der vorzugsweise ebenfalls aus einem Drehmotor besteht, der eine Antriebswelle aufweist, die mit der ebenfalls an der Vorderseite des Montageblocks 70 angeordneten Signalplatte 12 oder einer diese tragenden Platine fest verbunden ist. Dabei sind die Achsen der beiden Antriebe 65 und 71 vorzugsweise parallel zueinander angeordnet.

Die Antriebe 65 und 67 ermöglichen eine Verschiebung der Signalplatte 12 in einem flächigen Polarkoordinatensystem, da eine Drehung der Gewindespindel 68 eine Bewegung in Richtung des jeweiligen Radius erzeugt, der von der Achse des Antriebs 65 ausgeht, während eine Drehung des Antriebs 65 mit einer Drehung des Montageblocks 66 und daher auch der Signalplatte 12 um den Drehwinkel φ verbunden ist. Das mit einer derartigen Drehung verbundene Kippen des mit dem Bildaufnehmer 14 wiedergegebenen Gegenstands kann dadurch ausgeglichen werden, daß der Antrieb 71 eingeschaltet und dadurch die Signalplatte 12 um einen dem Drehwinkel φ entsprechenden Wert, jedoch in entgegengesetzter Richtung gedreht wird. Dadurch ist es einerseits möglich, bei starr angeordneter Vorrichtung 1 einen in der aufgenommenen Szene ausgewählten, ggf. bewegten Gegenstand auch bei Anwendung von Polarkoordinaten zu verfolgen, ohne daß sich der Gegenstand im sichtbar gemachten oder aufgenommenen Bild dreht. Andererseits kann in einem Anwendungsfall entsprechend Fig. 7 der Antrieb 71 zur Stabilisierung des Bildes des betrachteten Gegenstand bei Drehungen um die Vertikalachse benutzt werden. Zur Durchführung der Steuerungen können die in Fig. 5 dargestellten Blöcke 47 und 48 verwendet werden, wobei zusätzlich eine Umrechnung der Steuersignale in Polarkoordinaten erforderlich wäre.

Im übrigen können die anhand der Fig. 2 bis 4 und 9 beschriebenen Steuerungen sämtlich auch rein mechanisch und manuell durchgeführt werden. Außerdem kann bei der Ausführungsform nach Fig. 9 Zur Vermeidung von Verseilungen der an die Signalplatte 12 oder die Platine anzuschließenden Kabel 16 wie im Fall der Fig. 8 vorgesehen sein, den Antrieb 71 über eine Schleifringanordnung 72 mit der Signalplatte 12 zu verbinden, indem beispielsweise der Flansch 54 mit Verlängerungen versehen wird, die am Montageblock 70 befestigt werden. Außerdem kann das Kabel 16 über eine weitere, entsprechende Schleifringanordnung 73 geführt werden, über die der Antrieb 65 mit dem Montageblock 66 verbunden wird, damit auch der Montageblock 66 beliebig gedreht werden kann.

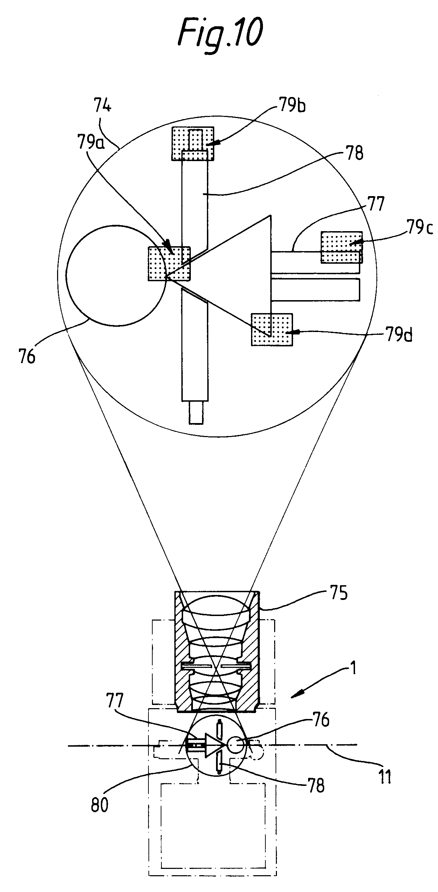

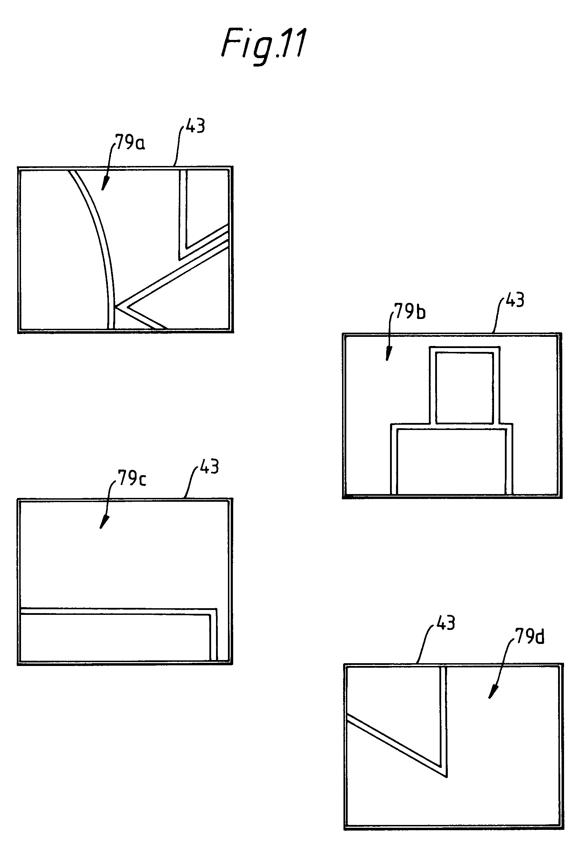

Fig. 10 und 11 zeigen schematisch die Funktionsweise der erfindungsgemäßen Vorrichtung 1 nach Fig. 2 bis 4. In Fig. 10 ist mit einem um 90° in die Zeichenebene verschwenkten Kreis das Gesichtsfeld 74 eines Objektivs 75, d.h. die erfaßbare Szene angedeutet, in der ein durch einen Kreis 76, einen Pfeil 77 und einen Balken 78 charakterisierter Gegenstand so angeordnet ist, wie er von einem Betrachter am Ort der Vorrichtung 1 gesehen wird. Von dem Gegenstand sollen beispielsweise vier charakteristische, durch je ein Rechteck umrahmte Einzelheiten 79a bis 79d sichtbar gemacht werden. Das Objektiv 75 bildet diesen Gegenstand auf der Abbildungsfläche 11 spiegelverkehrt ab, wie in Fig. 10 durch einen um 90° in die Zeichenebene verschwenkten Kreis 80 angedeutet ist. Die Teile 76,77 und 78 des Gegenstands sind dabei so dargestellt, wie sie aus der Richtung des hinter der Abbildungsfläche 11 angeordneten Bildaufnehmers 14 oder von einem Betrachter gesehen werden, der von der Seite der Einrichtung 17 her, d.h. von hinten z.B. auf eine in der Abbildungsfläche 11 angeordnete Mattscheibe blickt.

Damit auf dem Bildschirm des Bildschirmgeräts 43 (Fig. 5) nicht ein spiegel - verkehrtes Bild erscheint, muß eine Negativ/Positiv-Wandlung vorgenommen werden. Diese erfolgt mit den üblichen Mitteln der Fernsehtechnik irgendwo in der Einrichtung 17 oder an einer beliebigen anderen Stelle in dem Signalweg zwischen dem Bildaufnehmer 14 und dem Bildschirm des Bildschirmgeräts 43. Daher werden die Einzelheiten 79a bis 79d (Fig. 10) auf dem Bildschirmgerät 43 in positiver Darstellung als vergrößerte Einzelheiten 79a bis 79d (Fig. 11) sichtbar gemacht, wenn vorausgesetzt wird, daß die Größe des Bildaufnehmers 14 gerade so groß ist, wie den die Einzelheiten 79a bis 79d umrahmenden Rechtecken in Fig. 10 entspricht.

Bei einem praktischen Ausführungsbeispiel entsprechend Fig. 2 bis 4 wird ein CCD-Chip mit einem Bildaufnehmer verwendet, der eine Breite von 4,5 mm, eine Höhe von 6 mm und eine Diagonale von 7,5 mm besitzt und auf dieser Fläche mit 604 (H) x 575 (V) lichtempfindlichen Elementen (Pixels) versehen ist. Das Objektiv besitzt eine Brennweite von 24 mm, eine Blendenzahl von 2,8 und ist für eine Kleinbildkamera mit einem Format von 24 mm x 36 mm ausgelegt, das eine Diagonale von ca. 43,3 mm aufweist. Dadurch entspricht unter der Annahme, daß Gegenstände, die einen vergleichsweise großen Abstand vom Objektiv aufweisen, etwa in dessen Brennebene abgebildet werden, das vom Objektiv erfaßbare und innerhalb des Formats von 24 mm x 36 mm abbildbare Gesichtsfeld einem Kegel mit einem spitzen Winkel von ca. 84,1°. Da der Bildaufnehmer eine Diagonale von 7,5 mm besitzt, können von diesem jeweils nur Ausschnitte des Gesichtsfelds erfaßt werden, die innerhalb eines Kegels mit einem spitzen Winkel von ca. 17,8° liegen. Um das gesamte Gesichtsfeld entsprechend dem Format 24 mm x 36 mm zu erfassen, muß der durch die Diagonalen des Bildaufnehmers gebildete Mittelpunkt desselben innerhalb einer Kreisfläche mit einem Radius bewegbar sein, der etwa um 3,75 mm kleiner als die Hälfte der Diagonale des Formats 24 mm x 36 mm ist und etwa 17,9 mm beträgt.

Die Erfindung wird vorzugsweise in der üblichen CCD-Technik realisiert, obwohl sie auch in herkömmlicher Technik ausführbar wäre. Als CCD-Chips eignen sich beispielsweise diejenigen, die in der CCD-High-Resolution Colour Camera HR 600 C der Firma aqua Gesellschaft für Industriekameras und Mikroelektronik GmbH in 8960 Kempten/BRD oder im CCD-Subminiatur-Roboterauge SM 72 derselben Firma verwendet werden. Beide Geräte sind an die Fernsehnorm CCIR, 625 Zeilen, 50 Raster/S mit 2:1 Zeilensprung angepaßt. Beim Roboterauge SM 72 ist ein die Signalplatte enthaltender Sensorkopf von 30 mm x 40 mm x 30 mm (Breite x Höhe x Tiefe) vorgesehen, der über ein flexibles Kabel mit einem Elektronikteil verbunden ist, das über ein weiteres Kabel an.einen Monitor und die Stromversorung (12 V) anschließbar ist. Alternativ lassen sich auch die CCD-Signalplatten anderer Firmen, z.B. des Typs TH 7861 der Firma Thomson-CSF Division Tubes Electronique in Boulogne-Billancourt Cedex, Frankreich, oder die RGS-Bildaufnehmer der Firma Valvo GmbH U.B. Bauelemente der Philips GmbH in Hamburg/BRD verwenden.

Fig. 2 zeigt ein übliches Blockschaltbild für ein CCD-Bauelement. Hinter einem Objektiv 81 ist eine Signalplatte 82 mit einem CCD-Bildaufnehmer 83 angeordnet, der bei Bedarf in integrierter Technik mit einer matrixförmigen Speicherplatte und den zu deren Auslesen erforderlichen Registern zu einem CCD-Bildwandlerblock 84 zusammengefaßt ist. An die Signalplatte 82 ist je ein Horizontal- und Vertikaltreiber 85 bzw. 86 angeschlossen, der unter der Steuerung eines Zeitgebers 87 steht, der die zum zeilen- und spaltenweisen Auslesen des Bildaufnehmers 83 bzw. der Speicherplatte erforderlichen, horizontalen und vertikalen Abtast- bzw. Taktimpulse erzeugt. Die ausgelesenen Signale werden über einen Verstärkerblock 88 einem Aufbereitungsblock 89 zugeführt, der vom Zeitgeber 87 gesteuert wird und dem außerdem von einem durch den Zeitgeber 87 gesteuerten Synchronisationsblock 90 die erforderlichen Synchronisationssignale zugeführt werden. Das Programm für die Steuerung ist beispielsweise in einem als ROM ausgebildeten Programmspeicher 91 gespeichert.

Auf der Vordeseite weist die Signalplatte 82 einen optischen Filter 92 auf, der z.B. einen Schutzfilter zum Schutz des Bildaufnehmers 83 vor kurzwelliger Strahlung enthält. Direkt auf der Vorderseite des Bildaufnehmers 83 kann außerdem ein Farbrasterfilter 93 angeoordnet sein, der jedem Element bzw. jeder Zeile (Pixel) des Bildaufnehmers 83 ein rotes, grünes oder blaues Filterelement zuordnet, wenn farbige Bilder übertragen werden sollen. Die vom Bildaufnehmer 83 erhaltenen Signale werden im Aufbereitungsblock 89 in Abhängigkeit vom jeweiligen Bildschirmgerät fernsehgerecht aufbereitet und an einem mit diesem verbundenen Ausgang 94 als Bildsignal abgegeben. Mit der Linie 95 ist schließlich eine bevorzugte Trennstelle zwischen den beweglichen und ortsfest in einem Gehäuse angeordneten Bausteinen bezeichnet, wobei die Teile 82,85,86 und 88 den beweglichen und die Teile 81,87,89,90 und 91 den ortsfesten Block bilden.

Die Erfindung ist nicht auf die beschriebenen Ausführungsbeispiele beschränkt, die sich in vielfacher Weise abwandeln lassen. Anstelle der anhand Fig. 5 beschriebenen Blöcke 47 und 48 können beispielsweise auch, wie in Fig. 2 und 3 angedeutet ist, unmittelbar in das Gehäuse der Vorrichtung 1 eingebaute Kreisel 96,97 und 98 verwendet und diese an eine Stabilisierungs- und Steuerelektronik 99 angeschlossen werden. Dadurch werden alle für die Stabilisierung erforderlichen, und die Abweichungen von einer gewünschten Sollposition anzeigenden Signale in der Vorrichtung selbst ermittelt, in Stellsignale für die Bewegung der Antriebe 28,32 und 50 umgerechnet und zur entsprechenden Stabilisierung des betrachteten Bildausschnitts verwandt. Dabei kann der Kreisel 96 ein X-Kreisel, der Kreisel 97 ein Y-Kreisel und der Kreisel 98 ein die Drehbewegungen um die Z-Achse ermittelnder Kreisel sein.

Weiter ist es möglich, die erfindungsgemäße Vorrichtung wahlweise mit unterschiedlichen Objektiven zu versehen, wie dies in der Fotografie- und Fernsehtechnik allgemein üblich ist, und den aufgenommenen Gegenstand auf dem Bildschirm schwarz/weiß oder farbig sichtbar zu machen. Außerdem ist die Erfindung nicht auf die Anwendung sichtbarer Strahlung beschränkt, sondern in entsprechender Abwandlung auch zur Aufnahme von Gegenständen in der Infrarot-, Röntgen- oder Ultraviolett-Technik anwendbar. Schließlich können die Schleifringanordnungen vermieden werden, indem auf den Signalgeber 12 oder die damit verbundene Platine zusätzlich ein Mikrosender montiert wird. Dieser könnte all Signale, die bisher über die Kabel 16 übertragen werden, an die nachgeschaltete Einrichtung 17 senden. Die Einrichtung 17 würde in diesem Fall mit einem entsprechenden Empfänger versehen, der die empfangenen Signale beispielsweise an den Ausgang 18 oder einen mit diesem verbundenen Verstärker weiterleitet. Hierdurch würde sich der Vorteil ergeben, daß das Kabel 16 nur die Betriebsspannung für die Signalplatte bzw. deren Platine liefern müßte, was auf einfache Weise auch ohne die Anwendung einer kompliziert aufgebauten Schleifringanordnung realisierbar ist.

## Patentansprüche

1. Vorrichtung zur Aufnahme einer Szene, insbesondere zwecks deren Wiedergabe auf dem Bildschirm eines Bildschirmgeräts, mit einem Gehäuse, einem am Gehäuse montierten Objektiv zur Abbildung eines Bildes der Szene in einer Abbildungsfläche, einem im Gehäuse angeordneten, in der Abbildungsfläche liegenden, flächig ausgebildeten Bildaufnehmer zur Umwandlung der Helligkeits- und ggf. Farbwerte einzelner Bildpunkte eines Teils des Bildes in elektrische Signale, wobei die Fläche des Bildaufnehmers kleiner als das Bild ist und der Bildaufnehmer zur Aufnahme, Betrachtung und ggf. Verfolgung eines ausgewählten Gegenstandes innerhalb der Szene über das ganze Bild verschiebbar in der Abbildungsfläche (11) gelagert ist, und einem zur Verschiebung des Bildaufnehmers in der Abbildungsfläche (11) bestimmten, in unterschiedliche Richtungen wirksame Antriebe (28,32 bzw. 65,67) enthaltenden Antriebsmechanismus, dadurch gekennzeichnet, daß der Antriebsmechanismus einen weiteren Antrieb (50,71) zum Drehen des Bildaufnehmers (14) enthält.

2. Vorrichtung nach Anspruch 1, dadurch gekennzeichnet, daß der Bildaufnehmer (40) aus den lichtempfindlichen Elementen oder Zellen eines CCD-Bauelements besteht.

3. Vorrichtung nach einem der Ansprüche 1 bis 3, dadurch gekennzeichnet, daß der Bildaufnehmer (14) in einer Halterung (19) befestigt und die Halterung (19) mit der Schubstange (29) eines linearen Antriebs (28) verbunden ist.

4. Vorrichtung nach Anspruch 3, dadurch gekennzeichnet, daß die Halterung (19) verschiebbar in den Führungen (20,21) eines den Antrieb (28) tragenden und mit dem zweiten Antrieb (32) gekoppelten Rahmens (20,21,23,24) gelagert ist.

5. Vorrichtung nach einem der Ansprüche 1 bis 4, dadurchgekennzeichnet, daß die Abbildungsfläche (11) eine Ebene ist.

6. Vorrichtung nach einem der Ansprüche 1 bis 5, dadurch gekennzeichnet, daß dem Antriebsmechanismus für den weiteren Antrieb (50,71) eine Schleifringanordnung (53) zugeordnet ist.

7. Vorrichtung nach einem der Ansprüche 1 bis 6, dadurch gekennzeichnet, daß zur Stabilisierung der Szene auf dem Bildschirm wenigstens einer der Antriebe (28,32;65,67;50,71) durch Signale gesteuert wird, die für die Abweichungen der Lage eines Körpers, an dem die Vorrichtung montiert ist, bezuglich eines raumfesten Koordinatensystems charakteristisch sind.

8. Vorrichtung nach Anspruch 7, dadurch gekennzeichnet, daß eine die Lageabweichungssignale liefernde Einrichtung (96-98) in einem die Vorrichtung aufnehmenden Gehäuse (5) montiert ist.

## Claims

1. Device for taking a scene, in particular for the purpose of its reproduction on the screen of a monitor, with a housing, a lens mounted on the housing for forming an image of the scene in an imaging area, an image pick-up of flat form arranged in the housing and located in the imaging area for converting the brightness values and, if applicable, the colour values of individual picture elements of a part of the image into electrical signals, the area of the image pick-up being smaller than the image and the image pick-up being mounted to be movable in the imaging area (11) over the entire image for picking up, observing and, if need be, following a selected subject within the scene, and with a driving mechanism designed for moving the image pick-up in the imaging area (11) and comprising drives (28, 32 and 65, 67, respectively) operative in different directions, characterised in that the driving mechanism comprises an additional drive (50, 71) for rotating the image pick-up (14).

2. Device according to claim 1, characterised in that the image pick-up (14) consists of the photosensitive elements or cells of a CCD structural unit.

3. Device according to either of claims 1 and 2, characterised in that the image pick-up (14) is secured in a holder (19) and the holder (19) is connected to the connecting rod (29) of a linear drive (28).

4. Device according to claim 3, characterised in that the holder (19) is mounted slidably in the guides (20, 21) of a frame (20, 21, 23, 24) carrying the drive (28) and coupled with the second drive (32)

5. Device according to any one of claims 1 to 4, characterised in that the imaging area (11) is a plane.

6. Device according to any one of claims 1 to 5, characterised in that a slip ring arrangement (53) is associated with the driving mechanism for the additional drive (50, 71).

7. Device according to any one of claims 1 to 6, characterised in that for stabilising the scene on the screen at least one of the drives (28, 32; 65, 67; 50, 71) is controlled by signals which are characteristic for the variations in the position of a body on which the device is mounted with respect to a coordinate system fixed in space.

8. Device according to claim 7, characterised in that an arrangement (96-98) supplying the position variation signals is mounted in a housing (5) accommodating the device.

## Revendications

1. Dispositif pour l'enregistrement d'une scène, en particulier en vue de sa reproduction sur l'écran d'un appareil de visualisation, comprenant un boîtier avec un objectif monté sur ledit boîtier et destiné à reproduire une image de la scène dans une surface de reproduction, un analyseur d'images plan pour la transformation des valeurs de luminosité et éventuellement des valeurs chromatiques de points d'image isolés d'une partie de l'image en signaux électriques, monté dans le boîtier et situé dans la surface de reproduction, la surface de l'analyseur d'image étant plus petite que l'image et l'analyseur d'image étant monté, pour l'enregistrement, l'observation et éventuellement la poursuite d'un objet sélectionné à l'intérieur d'une scène, de manière déplaçable dans la surface de reproduction (11), et un mécanisme d'entraînement destiné au déplacement de l'analyseur d'image dans la surface de reproduction (11) et équipé d'entraînements (28, 32 et respectivement 65, 67) agissant dans des directions différentes, **caractérisé en ce** que le mécanisme d'entraînement comprend un entraînement supplémentaire (50, 71) pour la rotation de l'analyseur d'image (14).

2. Dispositif selon la revendication 1, caractérisé en ce que l'analyseur d'image (40) est constitué par les éléments ou cellules photosensibles d'un composant CCD.

3. Dispositif selon l'une des revendications 1 ou 2, caractérisé en ce que l'analyseur d'image (14) est fixé dans un support (19) et que le support (19) est couplé avec la bielle (29) d'un entraînement linéaire (28).

4. Dispositif selon la revendication 3, caractérisé en ce que le support (19) est monté de manière déplaçable dans des guides (20, 21) d'un cadre (20, 21, 23, 24) qui porte l'entraînement (28) et est couplé avec le second entraînement (32).

5. Dispositif selon l'une des revendications 1 à 4, caractérisé en ce que la surface de reproduction (11) est un plan.

6. Dispositif selon l'une des revendications 1 à 5, caractérisé en ce qu'au mécanisme d'entraînement est associé un système de bagues collectrices (53) pour l'entraînement supplémentaire (50, 71).

7. Dispositif selon l'une des revendications 1 à 6, caractérisé en ce que pour la stabilisation de la scène sur l'écran, au moins l'un des entraînements (28, 32; 65, 67; 50, 71) est commandé par des signaux qui sont caractéristiques pour des écarts de la position d'un corps sur lequel est monté le dispositif, par rapport à un système de coordonnées stabilisé.

8. Dispositif selon la revendication 7, caractérisé en ce qu'un dispositif (96 à 98) fournissant les signaux d'écart de position est monté dans un boîtier (5) abritant le dispositif.
